Europäisches Patentamt

(19) European Patent Office

Office européen des brevets

(11) Veröffentlichungsnummer: **0 081 222**
**A1**

(12) **EUROPÄISCHE PATENTANMELDUNG**

(21) Anmeldenummer: **82111247.1**

(22) Anmeldetag: **04.12.82**

(51) Int. Cl.³: **A 01 B 49/06**
**A 01 B 51/02**

(30) Priorität: **09.12.81 DE 3148679**

(43) Veröffentlichungstag der Anmeldung:
**15.06.83 Patentblatt 83/24**

(84) Benannte Vertragsstaaten:
**AT CH FR GB LI**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(54) **Bestell-Schlepper.**

(57) Zur Verminderung des Bodendruckes bzw. zur Vermeidung von Fahrspuren auf Ackerböden überhaupt, sind bei aus Traktor (1) und Anbaugeräten (5, 6) bestehenden, landtechnischen Gerätekombinationen, jeweils im Bereich der Traktorvorder- (2a) bzw. auch -hinterräder (2b) zusätzliche, auf dem Boden (E) laufende Stütz- und Andrückwalzen (8, 9) vorgesehen. Diese Walzen (8, 9) verteilen somit das Gewicht von Traktor (1) und Anbaugeräten (5, 6) gleichmäßig auf den Boden (E), so daß die Ballonräder (2) keinerlei vertiefte Fahrspuren bzw. Spurrillen hinterlassen.

Fig. 1

EP 0 081 222 A1

Croydon Printing Company Ltd

Ernst Weichel          D 7326 Heiningen, 02.12.1982
                       Bahnhofstr. 1

Bestell-Schlepper
————————————

Die Erfindung bezieht sich auf eine speziell zur Feldbestellung gedachte, landtechnische Gerätekombination, bestehend aus einem Traktor mit front- und heckseitigen Anbaugeräten zum beispielsweise gleichzeitigen Vorbereiten eines Saatbettes und Ausbringen der Saat.

Derartige Gerätekombinationen sind an sich bekannt, jedoch allesamt bislang mit dem Nachteil behaftet, daß die eigentliche Feldbestellung entweder nur zwischen den Fahrspuren des jeweiligen Traktors erfolgen kann und ständige Fahrspuren, auf deren

- 2 -

verdichtetem Boden keine Saat aufgehen kann,
auf dem Feld verbleiben, oder aber in baulich
aufwendiger Weise den Schlepperrädern nochmals Lockerungswerkzeuge nachgeordnet werden
müssen, was letztlich die Baulänge solcher
Einheiten erheblich und in unerwünschtem Maße
vergrößert.

Die Erfindung hat sich deshalb die Aufgabe gestellt, eine Gerätekombination nach dem Oberbegriff des Hauptanspruchs derart auszubilden,
daß von dem jeweiligen Traktor keinerlei tiefe
und störende Fahrspuren hinterlassen werden und
die Saatbettvorbereitung sowie das Einsäen selbst
auf der vollen Fahrzeugbreite in einem Arbeitsgang
erfolgen kann.

Gelöst wird diese Aufgabe durch die in den Patentansprüchen angegebenen Mittel und anordnungsgemäßen Maßnahmen, deren übergeordnete technische
Lehre darin zu sehen ist, durch zusätzlich zu
den Traktorrädern auf dem Ackerboden laufende

- 3 -

Walzen o.dgl., eine weitere Geräteabstützung
und somit eine ganz erhebliche Verringerung
des Bodendrucks an den Rädern zu erzielen.
Ein entsprechender Geräteaufbau ist in der
Zeichnung weitestgehend schematisch dargestellt und im Folgenden beschrieben.

Es zeigen:

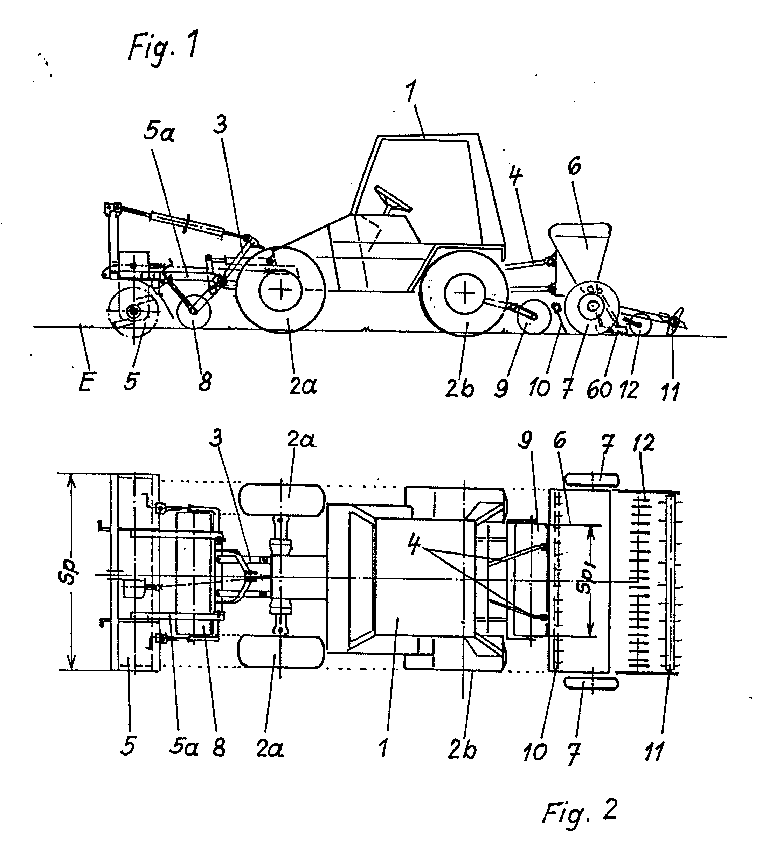

Fig. 1    die Seitenansicht eines erfindungs-
          gemäßen Bestellschleppers
          und

Fig. 2    eine Draufsicht zu Fig. 1.

Die als Ausführungsbeispiel dargestellte Gerätekombination besteht aus dem mit sog. Ballon- o.ä.
breiten Reifen 2, 2a, 2b versehenen Traktor 1, der
front- wie heckseitig in bekannter Weise Krafthebergestänge 3 und 4 aufweist. Am vorderen Kraftheber 3 sitzt über einen Rahmen oder Ausleger 5a
mit diesem 3 verbunden  eine Rotoregge 5 und
zwischen Rotoregge 5 und Traktorvorderrädern 2a
eine Stütz- oder Andrückwalze 8, deren Breite B
der Spurbreite Sp1 zwischen den Rädern 2a bzw. 2b

- 4 -

entspricht. Diese Walze 8 überträgt dabei einen Teil des Gewichtes von Rotoregge 5 und Traktor 1 auf den Erdboden und entlastet somit die Traktorvorderräder soweit, daß keine Fahrspuren im Ackerboden E entstehen. Eine Entlastung der Hinterräder 2b kann nun äquivalent dadurch erreicht werden, daß z.B. am hinteren Krafthebergestänge 4 ebenfalls eine Stütz- und Andrückwalze 9 gleicher Breite B angeordnet wird

die zugleich auch den Bodendruck der Laufräder 7 der Drillmaschine 6 kompensiert. In üblicher Weise vor der Drillmaschine 6 kann zudem noch eine, die gesamte Spurbreite Sp überdeckende Zinkenegge 10 liegen, während hinter den Säorganen 6a entweder das übliche Streichblech 11 oder der Striegel bzw.

eine weitere Andrückwalze 12 oder ein ähnliches Arbeitsgerät angeordnet sein kann.

Für den Fall, daß durch die zuvor beschriebenen Stützwalzen 8 und 9 bzw. 12 die Antriebsräder 2a, 2b des Traktors 1 zu sehr entlastet werden sollten, kann zur Erhöhung der Zugkraft auch

- 5 -

eine oder beide der Walzen 8 und 9 motorisch
oder hydraulisch angetrieben sein.

Im übrigen eignet sich die anmeldegemäße Lehre
neben der Feldbestellung beim Säen auch zur
Vorbereitung von Ackerböden zur Bepflanzung
sowie analog zur Bepflanzung selbst.

- 1 -

Patentansprüche

1. Landtechnische Gerätekombination zur Feldbestellung, bestehend aus einem Traktor mit front-
und heckseitigen Anbaugeräten zum beispielsweise gleichzeitigen Vorbereiten eines Saatbettes und Ausbringen der Saat,
gekennzeichnet durch
die Kombination folgender einzeln und für sich
teilweise bekannter Geräte bzw. Maßnahmen:

a) Als Antriebseinheit dient ein mit front- und
heckseitigem Krafthebergestänge (3 bzw.4) versehener, sowei mit sog. Ballonreifen (2) ausgestatteter, vorzugsweise zweiachsiger Traktor (1).

- 2 -

b) Am frontseitigen Krafthebergestänge (3) sitzt
eine flach arbeitende Rotoregge (5) o.ä. Bodenfräse und am heckseitigen Anschluß (4) eine
Drillmaschine (6) bekannter Bauart.

c) Jeweils zwischen vorn laufender Rotoregge bzw.
Fräse (5) und den Traktorvorderrädern (2a) einerseits sowie, falls erforderlich, den Traktorhinterrädern (2b) und den Stützrädern (7) der
Drillmaschine (6) andererseits, sitzen ggf.
mit dem Krafthebergestänge (3 bzw. 4) verbundene bzw. anderweitig am Traktor (1) oder
den Arbeitsgeräten (Fräse 5, Drillmaschine 6)
angelenkte und sich auf dem Boden (E) abstützende Andrückwalzen (8 und9).

2. Gerätekombination nach Anspruch 1,
dadurch gekennzeichnet,
daß die Andrückwalzen (8 und 9 ) zwischen den Fahrspuren ($Sp_1$) der Ballonreifen (2) laufen.

- 3 -

3. Gerätekombination nach den Ansprüchen 1 und 2,

dadurch gekennzeichnet,

daß die Andrückwalzen (8 und/oder 9) zwangsweise angetrieben sind.

4. Gerätekombination nach einem oder mehreren der vorhergehenden Ansprüche,

dadurch gekennzeichnet,

daß vor der Drillmaschine (6) eine die gesamte Fahrspur (Sp) überdeckende Zinkenegge (10) sitzt.

5. Gerätekombination nach einem oder mehreren der vorhergehenden Ansprüche,

dadurch gekennzeichnet,

daß der Drillmaschine (6) neben dem an sich bekannten Striegel oder Streichblech (11) eine

weitere, ebenfalls die gesamte Fahrspur (Sp) überdeckende Andrück- bzw. Abstützwalze (12)

nachgeordnet ist.

Fig. 1

Fig. 2

0081222

1/1

Europäisches
Patentamt

# EUROPÄISCHER RECHERCHENBERICHT

**0081222**
Nummer der Anmeldung

EP 82 11 1247

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | A 01 B 49/06 |
| A | US-A-4 124 079 (H.J. CROW)<br>* Zusammenfassung; Figur 1 * | 1 | A 01 B 51/02 |
| | --- | | |
| A | GB-A- 976 753 (C. VAN DER LELY N.V.) | | |
| | --- | | |
| A | AT-B- 330 493 (C. VAN DER LELY N.V.) | | |
| | ----- | | |

RECHERCHIERTE
SACHGEBIETE (Int. Cl. 3)

A 01 B 49/00
A 01 B 51/00

Der vorliegende Recherchenbericht wurde für alle Patentansprüche erstellt.

| Recherchenort<br>BERLIN | Abschlußdatum der Recherche<br>10-02-1983 | Prüfer<br>SCHOFER G |
|---|---|---|

KATEGORIE DER GENANNTEN DOKUMENTEN
X : von besonderer Bedeutung allein betrachtet
Y : von besonderer Bedeutung in Verbindung mit einer
anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82